# EUROPÄISCHE PATENTSCHRIFT

(11) **EP 1 368 432 B1**
(45) Veröffentlichungstag und Bekanntmachung des Hinweises auf die Patenterteilung: **01.12.2004**
(21) Anmeldenummer: 02719803.5
(22) Anmeldetag: 12.02.2002
(51) Int. Cl.: C09B 45/16, C09B 45/18, C09B 45/20, C09B 45/22, C09B 62/503, C09B 11/08

(54) **FARBMITTELKOMPOSITION**
COLORANT COMPOSITION
COMPOSITION COLORANTE

(30) Priorität: 14.02.2001 DE 10106682
(43) Veröffentlichungstag der Anmeldung: 10.12.2003
(73) Patentinhaber: Clariant GmbH, 65929 Frankfurt am Main (DE)
(72) Erfinder: WUZIK, Andreas, 86836 Untermeitingen (DE); GEISENBERGER, Josef, 65843 Sulzbach (DE); MENZEL, Heidemarie, 65812 Bad Soden (DE)
(74) Vertreter: Hütter, Klaus, Dr.
(86) Internationale Anmeldenummer: PCT/EP2002/001436
(87) Internationale Veröffentlichungsnummer: WO 2002/064679

(56) Entgegenhaltungen:
- WO-A-00/09615
- WO-A-94/05688
- WO-A-97/32933
- DD-A- 236 336
- US-A- 3 345 122
- US-A- 3 788 801
- US-A- 4 058 515

## Beschreibung

Die Erfindung betrifft das Gebiet der Farbmittel, insbesondere zur Verwendung in Aufzeichnungsflüssigkeiten für Schreib- und Aufzeichnungsgeräte, z.B. für Tintenstrahldruck-Verfahren (Ink-Jet Verfahren).

Beim Tintenstrahl- oder Ink-Jet-Verfahren handelt es sich um ein berührungsloses Druckverfahren, bei dem Tröpfchen der Aufzeichnungsflüssigkeit aus einer oder mehreren Düsen auf das zu bedruckende Substrat gelenkt werden.
Um Drucke hoher Schärfe und guter Auflösung zu erhalten, müssen die Aufzeichnungsflüssigkeiten bzw. die darin enthaltenen Farbstoffe hohen Anforderungen genügen, insbesondere im Hinblick auf Reinheit, Partikelfreiheit, Löslichkeit, Lagerstabilität, Viskosität, Oberflächenspannung sowie Leitfähigkeit. Insbesondere werden sehr hohe Anforderungen an die Farbstärke, Farbton, Brillanz und Echtheitseigenschaften wie beispielsweise Lichtechtheit, Wasserechtheit und Reibechtheit gestellt. Eine hohe Lichtechtheit ist insbesondere von großer Bedeutung für Ink-Jet-Anwendungen in Außenbereichen und bei der Herstellung von Ink-Jet Drucken mit photographischer Qualität.

Betrachtet man die Tintenformulierungen beim Mehrfarbendruck, kommt als zusätzliches Problem hinzu, dass die in den Tinten eingesetzten Farbstoffe möglichst genau den drei Primärfarben Gelb, Magenta und Cyan entsprechen müssen. Dabei wird die Auswahl geeigneter Farbstoffe nicht nur durch die benötigte Nuance, sondern auch durch die erforderliche Reinheit des Farbtons und die gewünschte Brillanz der Farbwiedergabe eingeschränkt. Bisher hat man jedoch keine Tintenzusammensetzung entwickeln können, die sämtliche gewünschten Eigenschaften in idealer Weise besitzt und erfolgreich in der Praxis eingesetzt werden kann.

Der Sachverhalt sei am Beispiel von Tinten der Nuance Magenta näher erläutert. In herkömmlichen Tinten auf Basis von wasserlöslichen Magenta-Farbstoffen werden z.B. Direktfarbstoffe, wie C.I. Direct Red 1, 11, 37, 62, 75, 81, 87, 89, 95 und 227, eingesetzt. Aus Direktfarbstoffen hergestellte Tinten besitzen aufgrund der Substantivität der Direktfarbstoffe eine ausgezeichnete Wasserbeständigkeit, bergen aber zwei Nachteile: Durch die geringe Löslichkeit in Wasser kommt es während des kontinuierlichen Druckens oder bei intermittierender Verwendung leicht zur Verstopfung der Düsen durch ausgefallenen Farbstoff. Außerdem wird vermehrt Aggregationsbildung beobachtet, was trübe Nuancen verursacht und so zu unbefriedigender Farbwiedergabe führt.
Andererseits wurde auch die Verwendung saurer Farbstoffe, wie beispielsweise C.I. Acid Red 1, 8, 52, 87, 94, 115, 131, 144, 152, 154, 186 und 245, untersucht, mit dem Ergebnis, dass zwar eine gute Farbwiedergabe erreicht wird, aber die Haltbarkeit der gedruckten Bilder wegen der geringen Licht- und Wasserbeständigkeit unzureichend ist.
Aus EP-A-0 312 004 sind Aufzeichnungsflüssigkeiten bekannt, die Reaktivfarbstoffe enthalten können. Drucke mit wasserlöslichen Reaktivfarbstoffen besitzen jedoch meist keine optimale Wasserbeständigkeit, wobei sich die Bildung von Chlorid- oder Sulfat-Ionen durch Hydrolyse der Reaktivgruppen zusätzlich negativ auswirkt.

Neben Farbstoffen können auch hochlichtechte Pigmente als Farbmittel in Ink-Jet Tinten wie z.B. C.I. Pigment Red 122, C.I. Pigment Red 176, C.I. Pigment Red 184, 185 oder C.I. Pigment Red 269 eingesetzt werden. Als nachteilig erwies sich, dass wenig brillante Drucke erhalten wurden.

Es besteht somit ein Bedarf an verbesserten Aufzeichnungsflüssigkeiten, welche den bereits bekannten magentafarbenen Tinten insbesondere in Farbton, in der Lagerstabilität und Wasserbeständigkeit überlegen sind und gleichzeitig die weiteren für den Ink-Jet Bereich geforderten Eigenschaften aufweisen.

Überraschenderweise wurde gefunden, dass die gestellten Anforderungen erfüllt werden können, wenn die nachstehend definierten Farbstoffmischungen eingesetzt werden.
Gegenstand der vorliegenden Erfindung sind Farbstoffmischungen, bestehend im wesentlichen aus einem Farbstoff der Formel (1) und einem Farbstoff der Formel (2) oder (3) 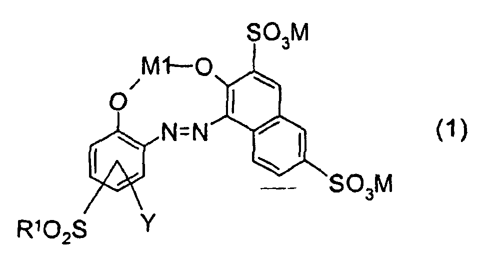 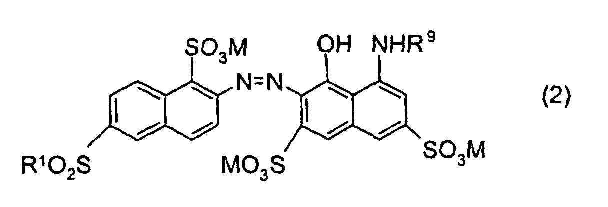 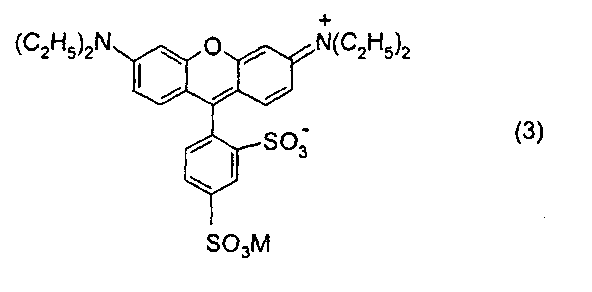 worin
- Y: H, (C₁-C₆)-Alkyl oder (C₁-C₆)-Alkoxy;
- R¹: OM, CH=CH₂, CH₂CH₂OR², CH₂CH₂NR³R⁴, CH₂CH₂SR⁵ oder CH₂CH₂CR⁶R⁷R⁸ bedeutet,
- R²: H, SO₃M, (C₁-C₆)-Alkyl, durch ein oder mehrere, beispielsweise 1, 2 oder 3, Reste aus der Gruppe OH, NH₂, COOM und SO₃M substituiertes oder unsubstituiertes, verzweigtes oder unverzweigtes (C₁-C₆)-Alkyl; (C₁-C₆)-Acyl, C₆-C₁₀-Aryl, durch ein oder mehrere, beispielsweise 1, 2 oder 3, Reste aus der Gruppe Halogen, OH, NH₂, COOM und SO₃M substituiertes C₆-C₁₀-Aryl, oder 5-10-gliedrige Heterocyclen mit 1 bis 4 Heteroatomen aus der Gruppe O, N und S, darstellen;
- R³ und R⁴: unabhängig voneinander H, (C₁-C₆)-Alkyl, durch ein oder mehrere, beispielsweise 1, 2 oder 3, Reste aus der Gruppe OH, NH₂, COOM und SO₃M substituiertes oder unsubstituiertes, verzweigtes oder unverzweigtes (C₁-C₆)-Alkyl, (C₁-C₆)-Acyl, C₆-C₁₀-Aryl, durch ein oder mehrere, beispielsweise 1, 2 oder 3, Reste aus der Gruppe OH, Halogen, NH₂, COOM und SO₃M substituiertes C₆-C₁₀-Aryl, darstellen;
- R⁵: (C₁-C₆)-Alkyl, durch ein oder mehrere, beispielsweise 1, 2 oder 3, Reste aus der Gruppe OH, NH₂, COOM und SO₃M substituiertes oder unsubstituiertes, verzweigtes oder unverzweigtes (C₁-C₆)-Alkyl, (C₁-C₆)-Acyl, C₆-C₁₀-Aryl, durch ein oder mehrere, beispielsweise 1, 2 oder 3, Reste aus der Gruppe OH, Halogen, NH₂, COOM und SO₃M substituiertes C₆-C₁₀-Aryl, darstellt;
- R⁶, R⁷, R⁸: unabhängig voneinander für H, C₁-C₆-Alkyl oder für durch ein oder mehrere, beispielsweise 1, 2 oder 3, Reste aus der Gruppe Halogen, OM, NH₂, COOCH₃, COOM und SO₃M substituiertes (C₁-C₆)-Alkyl steht;
- R⁹: für H, (C₁-C₆)-Alkyl, ein durch ein oder mehrere, beispielsweise 1, 2 oder 3, Reste aus der Gruppe OH, NH₂, COOM und SO₃M substituiertes verzweigtes oder unverzweigtes (C₁-C₆)-Alkyl; (C₁-C₆)-Acyl, C₆-C₁₀-Aryl, ein durch ein oder mehrere, beispielsweise 1, 2 oder 3, Reste aus der Gruppe OH, Halogen, NH₂, COOM und SO₃M substituiertes C₆-C₁₀-Aryl, steht,
- M1: für Cu, Co, Ni, Fe, Cr oder 2/3 Al steht; und
- M: für Wasserstoff, ein einwertiges Metall-Kation, ein Äquivalent eines mehrwertigen Metall-Kations oder ein gegebenenfalls mit (C₁-C₄)-Alkyl, (C₁-C₄)-Alkoxy-(C₁-C₄)-alkyl, Hydroxy-(C₁-C₄)-alkyl, Benzyl oder (C₆-C₁₀)-Aryl substituiertes Ammoniumion steht.
- M1: steht vorzugsweise für Cu.
- M: steht vorzugsweise für Wasserstoff, Natrium, Lithium oder Kalium.
- Y: steht vorzugsweise für Wasserstoff, Methyl, Ethyl, Methoxy oder Ethoxy.
- R¹: steht vorzugsweise für OH, CH=CH₂, CH₂CH₂OR² oder CH₂CH₂NR³R⁴.
- R²: steht vorzugsweise für Wasserstoff, SO₃M, Methyl, Ethyl, Acetyl, Phenyl, Chlorphenyl, Phenylsulfonsäure, Morpholinyl oder Pyridinyl.
- R³ und R⁴: stehen vorzugsweise für Wasserstoff, Methyl, Ethyl, Hydroxymethyl, Hydroxypropyl, Acetyl, Phenyl, Chlorphenyl, Phenylsulfonsäure, CH₂CH₂SO₃M, CH₂COOM, CH₂CH₂COOM oder CH₃CHCOOM.
- R⁵: steht vorzugsweise für Methyl, Ethyl, Propyl, Butyl, Phenyl, CH₂CH₂CH₂SO₃M oder CH₂CH₂COOM.
- R⁶, R⁷, R⁸: stehen vorzugsweise für Wasserstoff, Methyl, Ethyl, CH₂CH₂OM, CH₂CH₂NH₂ oder COOM.
- R⁹: steht vorzugsweise für Wasserstoff, Methyl, Ethyl, Acetyl, Benzoyl, Phenyl, oder mit Halogen, COOM oder SO₃M substituiertes Phenyl oder Benzoyl.

Bevorzugte Mischungsverhältnisse zwischen den Verbindungen der Formel (1) und (2), sowie (1) und (3), bezogen auf Trockengewichte, liegen zwischen 100:1 und 1:100, vorzugsweise zwischen 50:1 und 1:50, insbesondere zwischen 10:1 und 1:10.

Die Verbindung der Formel (1) mit SO₂R¹ in meta-Position zur Azo-Brücke und mit Y gleich H, sowie mit R¹ gleich β-Sulfatoethyl und M1 gleich Cu, ist unter dem Namen C.I. Reactive Red 23 bekannt.
Die Verbindung der Formel (2) mit R¹ gleich β-Sulfatoethyl und R⁹ gleich Benzoyl ist unter dem Namen C.I. Reactive Red 180 bekannt.
Die Verbindung der Formel (3) ist unter dem Namen C.I. Acid Red 52 bekannt.

Bevorzugt im Sinne der vorliegenden Erfindung ist eine Mischung aus C.I. Reactive Red 23 und C.I.Reactive Red 180, oder aus C.I.Reactive Red 23 und C.I.Acid Red 52. Bevorzugte Mischungsverhältnisse sind 1:10 bis 10:1, insbesondere 1:5 bis 5:1, jeweils bezogen auf Trockenmischungen.
Es kann auch vorteilhaft sein, eine Mischung aus den Farbstoffen der Formeln (1 ), (2) und (3) einzusetzen, wobei entweder (2) oder (3) als Nuancierfarbstoff in den nachstehend genannten Mengenverhältnissen eingesetzt wird.

Die erfindungsgemäßen Farbstoffmischungen können, abhängig von den eingesetzten Farbstoffen, zusätzlich noch ein Nuancierfarbmittel enthalten, vorzugsweise aus der Gruppe C.I. Direct Red 1, 11, 37, 62, 75, 81, 87, 89, 95, 227; C.I. Acid Red 1, 8, 87, 94, 115, 131, 144, 152, 154, 186, 245 und 289; C.I. Reactive Red 21, 22, 35, 63, 106, 107, 112, 113, 114, 126, 127, 128, 129, 130, 131, 137, 160, 161, 174; C.I. Pigment Red 122, 176, 184, 185 und 269. Das Nuancierfarbmittel ist vorzugsweise in einer Menge von 0,001 bis 5 Gew.-%, insbesondere von 0,01 bis 1 Gew.-%, bezogen auf das Trockengewicht der Gesamtmischung, enthalten.

Die erfindungsgemäßen Farbstoffmischungen können hergestellt werden, indem man die Farbstoffe der Formeln (1) und (2), bzw. (1) und (3) und ggf. das Nuancierfarbmittel in den angegebenen Mischungsverhältnissen in Form der trockenen Pulver, ihrer Lösungen, wasser- oder lösemittelfeuchten Presskuchen oder Masterbatche miteinander mischt.

Farbstoffe der Formel (1) können hergestellt werden, indem man das Anilinderivat der Formel (4) 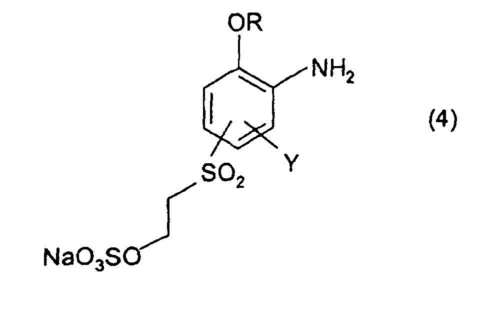 worin R ein Alkylrest, bevorzugt Methyl, Ethyl oder Propyl,
diazotiert und das daraus entstehende Diazoniumsalz mit einer Verbindung der Formel (5) 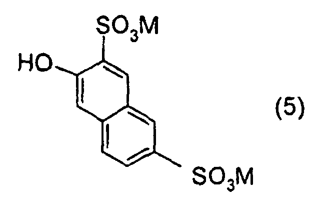 kuppelt und die entstandene Verbindung der Formel (6) 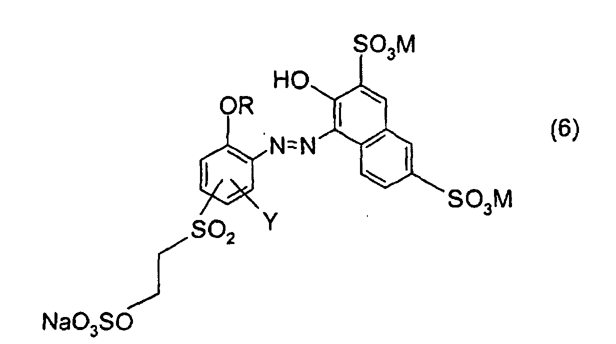 zur Komplexierung mit einer Metallsalz-Lösung zum Farbstoff (7) umsetzt.

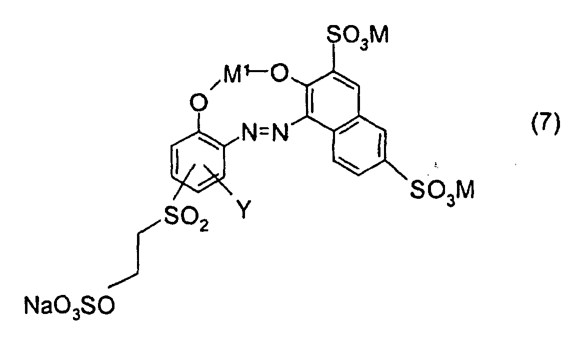

Abschließend erfolgt die Reaktion mit dem entsprechenden Nucleophil zum Farbstoff der allgemeinen Formel (1).

Alternativ besteht die Möglichkeit, zuerst das Amin (4) mit einem Nucleophil zur Verbindung (8) 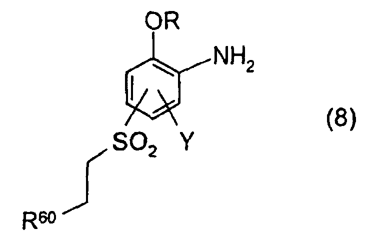 umzusetzen, worin R⁶⁰ die Bedeutung OR², NR³R⁴ oder SR⁵ hat, dann zu diazotieren und auf den Baustein (5) zu kuppeln und die Monoazo-Verbindung (9) 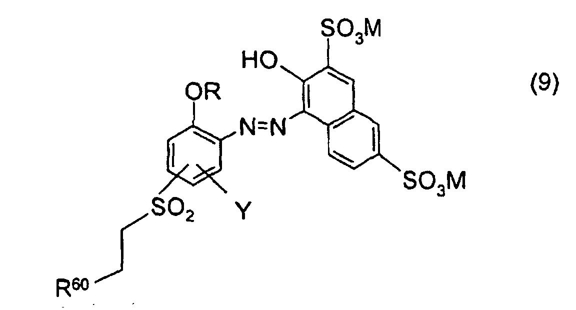 zu erhalten, die anschließend noch zu (1) metalliert wird.

Die erwähnten Diazotierungs- und Kupplungsschritte können nach üblichen Methoden durchgeführt werden.
Die Diazotierung wird bevorzugt in wässriger Lösung oder Suspension mit Natriumnitrit bei Temperaturen von 0 bis 10°C und einem pH-Wert zwischen 1 und 3 durchgeführt.

Die Azokupplung wird bevorzugt in wässriger Lösung oder Suspension bei Temperaturen von 0 bis 20°C und einem pH-Wert zwischen 4 und 10 durchgeführt.
Die molaren Verhältnisse zwischen dem jeweiligen Diazoniumsalz und der jeweiligen Kupplungskomponente betragen vorzugsweise 1: (0,8 bis 2).

Die Komplexierung mit dem Metall M¹ geschieht zweckmäßigerweise durch Zugabe einer wässrigen Metallsalzlösung, z.B. einem Metallsulfat, -chlorid, -bromid, -hydrogensulfat, -bicarbonat oder -carbonat.

Die Farbstoffe können auch durch das kontinuierliche Mischen von äquivalenten Mengen der Ausgangsprodukte in Form wässrig-saurer oder wässrig-alkalischer Lösungen in z.B. Mischdüsen und Durchflußreaktoren, ggf. mit einer Nachreaktionsphase in einem Reaktionskessel, dargestellt werden.

Gegenstand der vorliegenden Erfindung ist auch die Verwendung der genannten Mischungen zum Färben und Bedrucken von natürlichen und synthetischen Fasermaterialien (z.B. Polyester, Seide, Wolle, Mischgewebe), insbesondere zur Aufzeichnung von Schrift und Bildern auf verschiedenen Aufzeichnungsmedien, sowie zum Färben von Papier oder Zellstoffen in der Masse.

Für den Einsatz in Aufzeichnungsflüssigkeiten werden die beschriebenen Farbstoffe den genannten Anforderungen entsprechend aufbereitet. Die Farbstoffe können aus den zunächst erhaltenen, bevorzugt wässrigen Reaktionsgemischen durch Aussalzen und Filtrieren oder durch Sprühtrocknung, gegebenenfalls nach teilweiser oder vollständiger Entsalzung mittels Membranfiltration, isoliert werden. Es kann jedoch auch auf eine Isolierung verzichtet werden und die Farbstoffe enthaltenden Reaktionsmischungen durch Zusatz von organischen und/oder anorganischen Basen, eventuell Feuchthaltemitteln, Konservierungsmittel und gegebenenfalls nach teilweiser oder vollständiger Entsalzung mittels Membranfiltration direkt in konzentrierte Farbstofflösungen überführt werden. Alternativ können die Farbstoffe auch als Presskuchen (gegebenenfalls auch in Flush-Verfahren) oder als Pulver eingesetzt werden. Vorteilhafterweise werden die erfindungsgemäßen Farbstoffmischungen in möglichst salzfreier Form, d.h. frei von NaCl oder anderen üblichen anorganischen Salzen, die bei der Synthese der Farbstoffe entstanden sind, eingesetzt.

Für konzentrierte Farbstofflösungen geeignete anorganische Basen sind beispielsweise Lithiumhydroxid, Lithiumcarbonat, Natriumhydroxid, Natriumhydrogencarbonat, Natriumcarbonat, Kaliumhydroxid, Kaliumcarbonat und Ammoniak. Geeignete organische Basen sind beispielsweise Monoethanolamin, Diethanolamin, Triethanolamin, 2-Aminopropanol, 3-Aminopropanol, Dipropanolamin, Tripropanolamin, N-Methylaminoethanol, N,N-Dimethylaminoethanol, N-Phenylaminopropanol, Ethylendiamin, Tetramethylethylendiamin, Tetramethylpropylendiamin, Tetramethylhexylendiamin, Diethylentriamin, Triethylentetramin, Triethylamin, Diisopropylethylamin und Polyethylenimin.

Für konzentrierte Farbstofflösungen geeignete Feuchthaltemittel sind beispielsweise Formamid, Harnstoff, Tetramethylharnstoff, ε-Caprolactam, Ethylenglykol, Diethylenglykol, Triethylenglykol, Polyethylenglykol, Butylglykol, Methylcellosolve, Glycerin, N-Methylpyrrolidon, 1,3-Diethyl-2-imidazolidinon, Natrium-Xylolsulfonat, Natrium-Cumolsulfonat und Natrium-Butylmonoglykolsulfat.

Die erfindungsgemäßen Farbstoffmischungen eignen sich besonders zur Herstellung von Aufzeichnungsflüssigkeiten, insbesondere von Tinten auf wässriger und nichtwässriger Basis für das Ink-Jet-Druckverfahren, sowie für solche Tinten, die nach dem Hot-melt Verfahren arbeiten oder auf Mikroemulsionen basieren, aber auch für sonstige Druck-, Vervielfältigungs-, Markierungs-, Schreib-, Zeichen-, Stempel- oder Registrierverfahren.

Gegenstand der vorliegenden Erfindung sind auch Aufzeichnungsflüssigkeiten, die eine erfindungsgemäße Farbstoffmischung und gegebenenfalls andere Farbmittel zum Nuancieren enthalten. Solche Nuancierfarbmittel sind zweckmäßigerweise in einer Menge von 0 bis 20 Gew.-%, vorzugsweise von 0,01 bis 10 Gew.-%, insbesondere von 0,1 bis 5 Gew.-%, bezogen auf das Gesamtgewicht der Aufzeichnungsflüssigkeit, enthalten.
Die Zusammensetzung der Aufzeichnungsflüssigkeit muss dem jeweiligen Verwendungszweck angepasst werden.

Erfindungsgemäße Aufzeichnungsflüssigkeiten enthalten im allgemeinen insgesamt 0,1 bis 50 Gew.-% der besagten Mischung der Farbstoffe (1) und (2), oder (1) und (3), und ggf. der Nuancierfarbmittel, gerechnet als Trockengewicht, 0 bis 99 Gew.-% Wasser und 0,5 bis 99,5 Gew.-% organisches Lösungsmittel und/oder Feuchthaltemittel. In einer bevorzugten Ausführungsform enthalten die Aufzeichnungsflüssigkeiten 0,5 bis 15 Gew.-% der besagten Farbstoffmischung, gerechnet als Trockengewicht, 35 bis 75 Gew.-% Wasser und 10 bis 50 Gew.-% organisches Lösungsmittel und/oder Feuchthaltemittel; in einer anderen bevorzugten Ausführungsform 0,5 bis 15 Gew.-% der besagten Farbstoffmischung, gerechnet als Trockengewicht, 0 bis 20 Gew.-% Wasser und 70 bis 99,5 Gew.-% organisches Lösungsmittel und/oder Feuchthaltemittel.

Zur Herstellung der Aufzeichnungsflüssigkeiten benutztes Wasser wird vorzugsweise in Form von destilliertem oder entsalztem Wasser eingesetzt. Bei den in den Aufzeichnungsflüssigkeiten enthaltenen Lösemitteln und/oder Feuchthaltemitteln kann es sich um ein organisches Lösemittel oder um ein Gemisch derartiger Lösemittel handeln, wobei mit Wasser mischbare Lösemittel bevorzugt sind. Geeignete Lösemittel sind beispielsweise ein- oder mehrwertige Alkohole, deren Ether und Ester, z.B. Methanol, Ethanol, Propanol, Isopropanol, Butanol, Isobutanol; zwei- oder dreiwertige Alkohole, insbesondere mit 2 bis 6 C-Atomen, z.B. Ethylenglykol, Propylenglykol, 1,3-Propandiol, 1,4-Butandiol, 1,5-Pentandiol, 1,6-Hexandiol, 1,2,6-Hexantriol, Glycerin, Diethylenglykol, Dipropylenglykol, Triethylenglykol, Polyethylenglykol, Tripropylenglykol, Polypropylenglykol; niedere Alkylether von mehrwertigen Alkoholen, wie z.B. Ethylenglykol-mono-methyl, -ethyl- oder -butyl-ether, Triethylenglykol-monomethyl- oder -ethyl-ether; Ketone und Ketonalkohole wie z.B. Aceton, Methylethylketon, Diethylketon, Methylisobutylketon, Methylpentylketon, Cyclopentanon, Cyclohexanon, Diacetonalkohol; Amide, wie z.B. Dimethylformamid, Dimethylacetamid, N-Methylpyrrolidon; ferner Harnstoff, Tetramethylharnstoff, Thiodiglykol, ε-Caprolactam.

Weiter können die erfindungsgemäßen Aufzeichnungsflüssigkeiten noch übliche Zusatzstoffe enthalten, beispielsweise Konservierungsmittel, kationische, anionische oder nichtionogene oberflächenaktive Substanzen (Tenside und Netzmittel), sowie Mittel zur Regulierung der Viskosität, z.B. Polyvinylalkohol, Cellulosederivate, oder wasserlösliche natürliche oder künstliche Harze als Filmbildner bzw. Bindemittel zur Erhöhung der Haft- und Abriebfestigkeit. Des weiteren können Lichtschutzmittel enthalten sein.

Weiterhin können Amine, wie z. B. Ethanolamin, Diethanolamin, Triethanolamin, N,N-Dimethylethanolamin, Diisopropylamin, zur Erhöhung des pH-Wertes der Aufzeichnungsflüssigkeit enthalten sein, normalerweise zu 0 bis 10 Gew.-%, vorzugsweise 0,5 bis 5 Gew.-%, bezogen auf das Gesamtgewicht der Aufzeichnungsflüssigkeit.

Den Aufzeichnungsflüssigkeiten für das Ink-Jet-Druckverfahren können je nach Ausführungsform dieses Druckverfahrens, z.B. als Continuous-Jet-, Intermittent-Jet-, Impuls-Jet- oder Compound-Jet-Verfahren, noch weitere Additive, z.B. zur Pufferung des pH-Wertes, zur Einstellung der elektrischen Leitfähigkeit, der spezifischen Wärme, des thermischen Expansionskoeffizienten und der Leitfähigkeit, zugesetzt werden.

Bei der Lagerung erfindungsgemäßer Aufzeichnungsflüssigkeiten tritt keine Abscheidung von Niederschlägen auf, welche zu unscharfen Druckbildern oder zur Verstopfung von Düsen führt.
Die erfindungsgemäßen Aufzeichnungsflüssigkeiten liegen hinsichtlich Viskosität und Oberflächenspannung in den für Ink-Jet-Verfahren geeigneten Bereichen. Sie liefern Druckbilder hoher optischer Dichte mit ausgezeichneter Licht- und Wasserechtheit.

Desweiteren kann die erfindungsgemäße Magenta-Farbstoffmischung als Tinten-Set in Kombination mit Schwarz-, Gelb- und/oder Cyan-Farbmitteln eingesetzt werden. Bei den Gelb- und Cyan-Tönen handelt es sich sowohl um Farbstoffe, wie z.B. die C.I. Farbstoffe Acid Yellow 17, C.I. Acid Yellow 23, C.I. Direct Yellow 86, C.I. Direct Yellow 98, C.I. Direct Yellow 132, C.I. Reactive Yellow 37, C.I. Acid Blue 9, C.I. Direct Blue 199, als auch um Pigmente, wie C.I. Pigment Yellow 17, C.I. Pigment Yellow 74, C.I. Pigment Yellow 83, C.I. Pigment Yellow 97, C.I. Pigment Yellow 120, C.I. Pigment Yellow 139, C.I. Pigment Yellow 151, C.I. Pigment Yellow 155, C.I. Pigment Yellow 180, C.I. Pigment Violet 19, C.I. Pigment Blue 15, C.I. Pigment Blue 15:3, C.I. Pigment Blue 15:4. Bei den Schwarztönen handelt es sich bevorzugt um C.I. Food Black 1 und 2, C.I. Direct Black 168, C.I. Direct Black 195, C.I. Reactive Black 8, C.I. Reactive Black 31, C.I. Sol.Sulfur Black 1, Carbon Black.
Bei den Reaktivfarbstoffen können auch mit Nucleophilen abreagierte Farbstoffe in Tinten-Sets eingesetzt werden.

Weiterhin sind die erfindungsgemäßen Farbstoffmischungen als Farbmittel in elektrophotographischen Tonern und Entwicklern, wie z.B. Einkomponenten- und Zweikomponentenpulvertonern, Magnettonern, Flüssigtonem, Polymerisationstonem sowie anderen Spezialtonern geeignet.

Typische Tonerbindemittel sind Polymerisations-, Polyadditions- und Polykondensationsharze, wie Styrol- Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere inhaltsstoffe, wie Ladungssteuermittel, Wachse oder Fließmittel, enthalten können oder im Nachhinein zugesetzt bekommen können.
Des weiteren sind erfindungsgemäße Farbstoffmischungen als Farbmittel in Pulver und Pulverlacken geeignet, insbesondere in triboelektrisch oder elektrostatisch versprühten Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.
Als Pulverlackharze werden typischerweise Epoxidharze carboxyl- und hydroxylgruppenhaltige Polyesterharze, Polyurethane- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt.

Außerdem sind die erfindungsgemäßen Farbstoffmischungen als Farbmittel für Farbfilter, sowohl für die additive wie für die subtraktive Farberzeugung (P. Gregory "Topics in Applied Chemistry: High Technology Applications of Organic Colorants" Plenum Press, New York 1991, Seite 15-25), sowie als Farbmittel in Electronic lnks für sogenannte "Electronic Newspapers" geeignet.
Auch in den vorstehend beschriebenen Anwendungsgebieten können die erfindungsgemäßen Farbstoffmischungen zusätzlich mit anderen Farbstoffen und/oder Pigmenten nuanciert werden, wie z.B. mit C.I. Direct Red 1, 11, 37, 62, 75, 81, 87, 89, 95 und 227; C.I. Acid Red 1, 8, 87, 94, 115, 131, 144, 152, 154, 186, 245 und 289; C.I. Pigment Red 57:1, 122, 146, 176, 184, 185 und 269.

In den nachstehenden Beispielen wird die Lichtechtheit nach DIN 54003 (blaue Wollskala) bestimmt. Dabei bedeutet 1 sehr gering, 2 gering, 3 mäßig, 4 ziemlich gut, 5 gut, 6 sehr gut.

### Beispiel 1: Herstellung des Farbstoffs (1)

### a) Diazotierung der Aminkomponente (4)

16,67 g (0,05 mol) der Aminkomponente (4) (R = Methyl, Y = H) werden in 20 ml 10N Salzsäure eingetragen, mit 20 ml salzfreiem Wasser versetzt und 30 min gerührt. Anschließend stellt man mit 20 g Eis die Temperatur auf 0 bis 5°C ein und gibt innerhalb von 1,5 h 3,62 g Natriumnitrit zu und rührt für 3 h bei 5 bis 8°C. Der Überschuß an Nitrit wird mit Amidosulfonsäure entfernt.

### b) Kupplung zum Monoazofarbstoff (6)

17,41 g (0,05 mol) des Kupplungsbausteins (5) (M = Na) werden in 60 ml salzfreiem Wasser angerührt und mit 10N Natronlauge auf pH 6 bis 9 gestellt und mit 25 g Eis versetzt. Zu dieser Lösung wird die unter a) hergestellte Reaktionsmischung zugetropft, der pH-Wert mit Soda gehalten und solange gerührt, bis die Umsetzung quantitativ erfolgt ist.
Alternativ kann der Kupplungsbaustein auch zur Diazo-Lösung getropft, oder die beiden Reaktionspartner kontinuierlich in den erforderlichen Molverhältnissen zusammengemischt werden.

### c) Entmethylierende Kupferung

Die in b) erhaltene Farbstofflösung wird mit 10N Salzsäure auf pH 3-5 eingestellt, mit 12,98 g (0,052 mol) Kupfersulfat x 5H₂O und mit 11,3 g Natriumacetat versetzt und bei 95°C 48 h gerührt. Nach Abkühlen auf Raumtemperatur wird die Reaktionslösung mit Na-Thiosulfat x 5H₂O versetzt und 4 h bei 90°C gerührt. Abschließend wird die Farbstofflösung filtriert.
Alternativ kann die Metallierung auch in einem Druckreaktor oder nach dem in Beispiel 2d) beschriebenen Verfahren erfolgen.

### c) Umsetzung mit Diethanolamin

15,77 g (0,15 mol) Diethanolamin werden in 50 ml entsalztem Wasser gelöst zur Farbstofflösung gegeben. Dann stellt man den pH mit 10N Natronlauge auf 9-10, erhitzt auf 60°C für 30 min und erhält so den Farbstoff (1) in gelöster Form.

### Beispiel 2 Herstellung des Farbstoffs (1):

### a) Reaktion des Amins (4) mit Diethanolamin

16,67 g (0,05 mol) der Aminkomponente (4) werden in 50 ml entsalztem Wasser gelöst und bei pH 8,5-10 mit 5,78 g (0,055 mol) Diethanolamin versetzt. Die Temperatur wird für 1 h auf 60°C angehoben.

### b) Diazotierung der Aminkomponente (8)

Zu der unter a) erhaltenen Reaktionslösung werden 25 ml 10N Salzsäure und 20 ml Wasser gegeben. Nach 30 minütigem Rühren wird durch Zugabe von 25 g Eis auf 0-5°C gekühlt und innerhalb von 1,5 h 3,62 g Natriumnitrit zugegeben. Man rührt für 3 h bei 5-8°C und entfernt dann den Überschuß Nitrit mit Aminosulfon.

### c) Kupplung zum Monoazofarbstoff (9)

17,41 g (0,05 mol) des Kupplungsbausteins (5) (M = Na) werden in 60 ml salzfreiem Wasser angerührt und mit 10N Natronlauge auf pH 6-9 gestellt und mit 25 g Eis versetzt. Zu dieser Lösung wird die unter b) hergestellte Reaktionsmischung zugetropft, der pH-Wert mit Soda gehalten und solange gerührt, bis die Umsetzung vollständig erfolgt ist.

Alternativ kann der Kupplungsbaustein auch zur Diazo-Lösung getropft werden.

### d) Entmethylierende Kupferung

12,98 g (0,052 mol) Kupfersulfat x 5H₂O werden in 20 ml entsalztem Wasser gelöst und mit 20,8 ml Ammoniak (25 %ig) versetzt und für 10 min auf 60°C erhitzt. Zu der aus c) erhaltenen Farbstofflösung gibt man 12,3 g (0,117 mol) Diethanolamin (99 %ig) und fügt dann die Kupferkomplexlösung zu. Anschließend wird bei pH 9-10 für 3 h auf 90°C erhitzt und der Umsatz mit DC kontrolliert. Das überschüssige ionogene Kupfer wird durch Zugabe von Na-Thiosulfat x 5H₂O und Erhitzen auf 90°C für 4 h durch abschließende Filtration entfernt.

### Beispiel 3: Herstellung einer Aufzeichnungsflüssigkeit

Man stellt jeweils eine 10 gew.-%ige salzfreie wässrige Lösung des Farbstoffes mit der allgemeinen Formel (1) (mit R¹ = CH₂CH₂NR³R⁴, R³ = R⁴ = CH₂CH₂OH und Y = H; SO₂R¹ ist in meta-Stellung zur Azobrücke) und der Formel (2) (mit R¹ = CH₂CH₂OR², R² = SO₃M, R⁹ = COC₆H₅ bekannt als C.I. Reactive Red 180) her. Anschließend werden bei Raumtemperatur 1500 ml der Farbstoff-Lösung (1) mit 498 ml der Farbstoff-Lösung (2) gemischt. Zusätzlich werden zum Nuancieren 2 ml einer 1 gew.%-igen C.I. Acid Red 186-Lösung untergerührt. Die so erhaltene Farbstofflösung wird mit 4 g ®Proxel GXL konserviert.
Absorptionsspektrum in Wasser: λₘₐₓ = 519 nm;
Lichtechtheit: 5 (blaue Wollskala);
Lagerstabilitätstest: keine Feststoffpartikel nach 6 Wochen bei 50°C sowie
10 Tage bei -20°C; Oberflächenspannung: >50 mN/m (4 %ige wässrige Tinte).

### Beispiel 4: Herstellung einer Aufzeichnungsflüssigkeit

Man mischt 2000 ml einer 10 gew.-%igen salzfreien Lösung des Farbstoffes mit der allgemeinen Formel (1) (mit R¹ = CH₂CH₂NR³R⁴, R³ = H, R⁴ = CH₂CH₂SO₃M und Y = H; SO₂R¹ ist in meta-Stellung zur Azobrücke) mit 498 ml einer ebenfalls entsalzten 10 gew.-%igen Lösung von C.I. Reactive Red 180. Zur Konservierung der Farblösung werden 0,2 Vol-% ®Mergal K10 N zugesetzt.
Absorptionsspektrum in Wasser: λₘₐₓ = 522 nm;
Lichtechtheit: 5;
Lagerstabilität: keine Feststoffpartikel nach 6 Wochen bei 50°C sowie 10 Tage bei-20°C.
Oberflächenspannung: >50 mN/m (4 %ige wässrige Tinte).

### Beispiel 5: Herstellung einer Aufzeichnungsflüssigkeit

Zu 1000 ml einer 10 gew.-%igen salzfreien Lösung des Farbstoffes mit der allgemeinen Formel (1) (mit R¹ = CH₂CH₂NR³R⁴, R³ = H, R⁴ = CH₂CO₂M und Y = H; SO₂R¹ ist in meta-Stellung zur Azobrücke), gibt man 10ml einer ebenfalls entsalzten 10 gew.-%igen Lösung von C.I. Reactive Red 180. Der pH-Wert der Lösung wird auf 3,5-4,5 eingestellt. Die Farbstofflösung wird mit 0,2 Vol-% Proxel GXL konserviert.
Absorptionsspektrum in Wasser: λₘₐₓ = 517 nm;
Lichtechtheit: 5;
Lagerstabilität: keine Feststoffpartikel nach 4 Wochen bei 50°C sowie 10 Tage bei-20°C.
Oberflächenspannung: >50 mN/m (4 %ige wässrige Tinte).

### Beispiel 6: Herstellung einer Aufzeichnungsflüssigkeit

Man stellt jeweils eine 10 gew.-%ige salzfreie wässrige Lösung des Farbstoffes mit der allgemeinen Formel (1) (mit R¹ = CH₂CH₂NR³R⁴, R³ = R⁴ = CH₂CH₂OH und Y = H; SO₂R¹ ist in meta-Stellung zur Azobrücke) und der Formel (3), bekannt als C.I. Acid Red 52 her. Anschließend werden bei Raumtemperatur 1500 ml der Farbstoff-Lösung mit 498 ml der Acid Red 52-Lösung gemischt. Zusätzlich werden zum Nuancieren 2 ml einer 1 gew.%-igen C.I. Acid Red 186-Lösung untergerührt. Die so erhaltene Farbstofflösung wird mit 4 g ®Proxel GXL konserviert. Absorptionsspektrum in Wasser: λₘₐₓ = 533 nm;
Lichtechtheit: 5 (blaue Wollskala);
Lagerstabilitätstest: keine Feststoffpartikel nach 6 Wochen bei 50°C sowie 10 Tage bei -20°C;
Oberflächenspannung: >50 mN/m (4 %ige wässrige Tinte).

### Beispiel 7: Herstellung einer Aufzeichnungsflüssigkeit

Man mischt 2000 ml einer 10 gew.-%igen salzfreien Lösung des Farbstoffes mit der allgemeinen Formel (1) (mit R¹ = CH₂CH₂NR³R⁴, R³ = H, R⁴ = CH₂CH₂SO₃M und Y = H; SO₂R¹ ist in meta-Stellung zur Azobrücke) mit 498 ml einer ebenfalls entsalzten 10 gew.-%igen Lösung von C.I. Acid Red 52. Zur Konservierung der Farblösung werden 0,2 Vol-% ®Mergal K10 N zugesetzt.
Absorptionsspektrum in Wasser: λₘₐₓ = 536 nm;
Lichtechtheit: 5;
Lagerstabilität: keine Feststoffpartikel nach 6 Wochen bei 50°C sowie 10 Tage bei -20°C.
Oberflächenspannung: >50 mN/m (4 %ige wässrige Tinte).

### Beispiel 8: Herstellung einer Aufzeichnungsflüssigkeit

Man mischt 2000 ml einer 10 gew.-%igen salzfreien Lösung des Farbstoffes mit der allgemeinen Formel (1) (mit R¹ = CH₂CH₂NR³R⁴, R³ = R⁴ = CH₂CH₂OH und Y = H; SO₂R¹ ist in meta-Stellung zur Azobrücke) mit 498 ml einer ebenfalls entsalzten 10 gew.-%igen Lösung von C.I. Acid Red 52. Zur Konservierung der Farblösung werden 0,2 Vol-% ®Mergal K10 N zugesetzt.
Absorptionsspektrum in Wasser: λₘₐₓ = 528 nm;
Lichtechtheit: 5;
Lagerstabilität: keine Feststoffpartikel nach 6 Wochen bei 50°C sowie 10 Tage bei-20°C.
Oberflächenspannung: >50 mN/m (4 %ige wässrige Tinte).

### Beispiel 9: Herstellung einer Aufzeichnungsflüssigkeit

Man mischt 2000 ml einer 10 gew.-%igen salzfreien Lösung des Farbstoffes mit der allgemeinen Formel (1) (mit R¹ = CH₂CH₂NR³R⁴, R³ = H, R⁴ = CH₂CH₂OH und Y = H; SO₂R¹ ist in meta-Stellung zur Azobrücke) mit 498 ml einer ebenfalls entsalzten 10 gew.-%igen Lösung von C.I. Reactive Red 180. Zur Konservierung der Farblösung werden 0,2 Vol-% ®Mergal K10 N zugesetzt. Absorptionsspektrum in Wasser: λₘₐₓ = 525 nm;
Lichtechtheit: 5;
Lagerstabilität: keine Feststoffpartikel nach 6 Wochen bei 50°C sowie 10 Tage bei-20°C.
Oberflächenspannung: >50 mN/m (4 %ige wässrige Tinte).

## Patentansprüche

1. Farbstoffmischung, bestehend aus einem Farbstoff der Formel (1) und einem Farbstoff der Formel (2) oder (3) 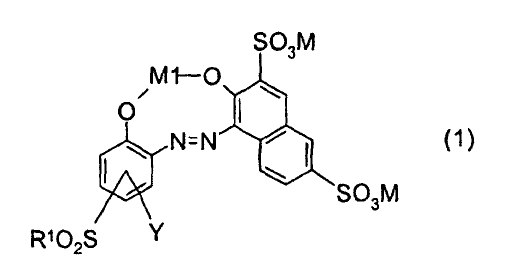 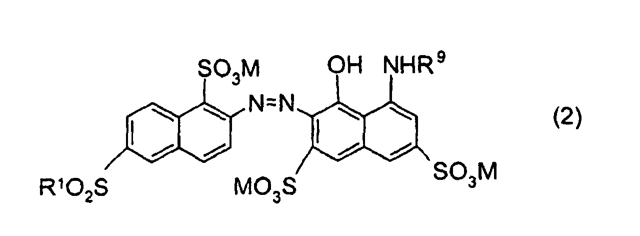 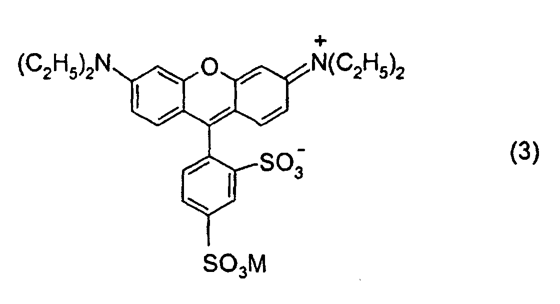 worin
Y H, (C₁-C₆)-Alkyl oder (C₁-C₆)-Alkoxy;
R¹ OM, CH=CH₂, CH₂CH₂OR², CH₂CH₂NR³R⁴, CH₂CH₂SR⁵ oder CH₂CH₂CR⁶R⁷R⁸ bedeutet,
R² H, SO₃M, (C₁-C₆)-Alkyl, durch ein oder mehrere Reste aus der Gruppe OH, NH₂, COOM und SO₃M substituiertes oder unsubstituiertes, verzweigtes oder unverzweigtes (C₁-C₆)-Alkyl; (C₁-C₆)-Acyl, C₆-C₁₀-Aryl, durch ein oder mehrere Reste aus der Gruppe Halogen, OH, NH₂, COOM und SO₃M substituiertes C₆-C₁₀-Aryl, oder 5-10-gliedrige Heterocyclen mit 1 bis 4 Heteroatomen aus der Gruppe O, N und S, darstellen;
R³ und R⁴ unabhängig voneinander H, (C₁-C₆)-Alkyl, durch ein oder mehrere Reste aus der Gruppe OH, NH₂, COOM und SO₃M substituiertes oder unsubstituiertes, verzweigtes oder unverzweigtes (C₁-C₆)-Alkyl, (C₁-C₆)-Acyl, C₆-C₁₀-Aryl, durch ein oder mehrere Reste aus der Gruppe OH, Halogen, NH₂, COOM und SO₃M substituiertes C₆-C₁₀-Aryl, darstellen;
R⁵ (C₁-C₆)-Alkyl, durch ein oder mehrere Reste aus der Gruppe OH, NH₂, COOM und SO₃M substituiertes oder unsubstituiertes (C₁-C₆)-Alkyl, (C₁-C₆)-Acyl, C₆-C₁₀-Aryl, durch ein oder mehrere Reste aus der Gruppe OH, Halogen, NH₂, COOM und SO₃M substituiertes C₆-C₁₀-Aryl, darstellt;
R⁶, R⁷, R⁸ unabhängig voneinander für Wasserstoff, C₁-C₆-Alkyl oder für durch ein oder mehrere Reste aus der Gruppe Halogen, OH, NH₂, COOCH₃, COOM und SO₃M substituiertes (C₁-C₆)-Alkyl steht;
R⁹ für H, (C₁-C₆)-Alkyl, ein durch ein oder mehrere Reste aus der Gruppe OH, NH₂, COOM und SO₃M substituiertes verzweigtes oder unverzweigtes (C₁-C₆)-Alkyl; (C₁-C₆)-Acyl, C₆-C₁₀-Aryl, ein durch ein oder mehrere Reste aus der Gruppe OH, Halogen, NH₂, COOM und SO₃M substituiertes C₆-C₁₀-Aryl, steht,
M1 für Cu, Co, Ni, Fe, Cr oder 2/3 Al steht; und
M für Wasserstoff, ein einwertiges Metall-Kation, ein Äquivalent eines mehrwertigen Metall-Kations oder ein gegebenenfalls mit (C₁-C₄)-Alkyl, (C₁-C₄)-Alkoxy-(C₁-C₄)-alkyl, Hydroxy-(C₁-C₄)-alkyl, Benzyl oder (C₆-C₁₀)-Aryl substituiertes Ammoniumion steht.

2. Farbstoffmischung nach Anspruch 1, **dadurch gekennzeichnet, dass** M für Wasserstoff, Natrium, Lithium oder Kalium steht.

3. Farbstoffmischung nach Anspruch 1 oder 2, **dadurch gekennzeichnet, dass** Y für Wasserstoff, Methyl, Ethyl, Methoxy oder Ethoxy steht.

4. Farbstoffmischung nach einem oder mehreren der Ansprüche 1 bis 3, **dadurch gekennzeichnet, dass**
R¹ für OH, CH=CH₂, CH₂CH₂OR² oder CH₂CH₂NR³R⁴ steht.

5. Farbstoffmischung nach einem oder mehreren der Ansprüche 1 bis 4, **dadurch gekennzeichnet, dass**
R² für Wasserstoff, SO₃M, Methyl, Ethyl, Acetyl, Phenyl, Chlorphenyl, Phenylsulfonsäure, Morpholinyl oder Pyridinyl steht.

6. Farbstoffmischung nach einem oder mehreren der Ansprüche 1 bis 5, **dadurch gekennzeichnet, dass**
R⁹ für Wasserstoff, Methyl, Ethyl, Acetyl, Benzoyl, Phenyl oder mit Halogen, COOM oder SO₃M substituiertes Phenyl oder Benzoyl steht.

7. Farbstoffmischung nach einem oder mehreren der Ansprüche 1 bis 6, **dadurch gekennzeichnet, dass** das Mischungsverhältnis zwischen den Farbstoffen der Formel (1) und (2), sowie (1) und (3), bezogen auf Trockengewichte, 100:1 bis 1:100, vorzugsweise 10:1 bis 1:10, ist.

8. Farbstoffmischung nach einem oder mehreren der Ansprüche 1 bis 7, **dadurch gekennzeichnet, dass** der Farbstoff der Formel (1) C.I. Reactive Red 23, der Farbstoff der Formel (2) C.I. Reactive Red 180 und der Farbstoff der Formel (3) C.I. Acid Red 52 ist.

9. Farbstoffmischung nach einem oder mehreren der Ansprüche 1 bis 8, **dadurch gekennzeichnet, dass** zusätzlich ein Nuancierfarbmittel aus der Gruppe C.I. Direct Red 1, 11, 37, 62, 75, 81, 87, 89, 95, 227; C.I. Acid Red 1, 8, 87, 94, 115, 131, 144, 152, 154, 186, 245 und 289; C.I. Reactive Red 21, 22, 35, 63, 106, 107, 112, 113, 114, 126, 127, 128, 129, 130, 131, 137, 160, 161, 174; C.I. Pigment Red 122, 176, 184, 185 und 269 enthalten ist.

10. Verfahren zur Herstellung einer Farbstoffmischung nach mindestens einem der Ansprüche 1 bis 9, **dadurch gekennzeichnet, dass** man die Farbstoffe der Formeln (1) und (2), bzw. (1) und (3) und ggf. das Nuancierfarbmittel in Form der trockenen Pulver, ihrer Lösungen, wasser- oder lösemittelfeuchten Presskuchen oder Masterbatche miteinander mischt.

11. Verwendung einer Farbstoffmischung nach mindestens einem der Ansprüche 1 bis 9 zum Färben und Bedrucken von natürlichen und synthetischen Fasermaterialien, zur Aufzeichnung von Schrift und Bildern auf einem Aufzeichnungsmedium und zum Färben von Papier oder Zellstoff in der Masse.

12. Aufzeichnungsflüssigkeit, enthaltend eine Farbstoffmischung nach einem oder mehreren der Ansprüche 1 bis 9.

13. Aufzeichnungsflüssigkeit nach Anspruch 12, bestehend im wesentlichen aus 0,1 bis 50 Gew.-% der Farbstoffmischung, gerechnet als Trockengewicht, 0 bis 99 Gew.-% Wasser und 0,5 bis 99,5 Gew.-% organisches Lösungsmittel und/oder Feuchthaltemittel.

14. Verwendung der Aufzeichnungsflüssigkeit nach Anspruch 12 oder 13 als Ink-Jet-Tinte.

15. Tintenset, bestehend aus einer magentafarbenen Aufzeichnungsflüssigkeit nach Anspruch 12 oder 13, einer schwarzen Aufzeichnungsflüssigkeit, einer gelben Aufzeichnungsflüssigkeit und/oder einer cyanfarbenen Aufzeichnungsflüssigkeit.

## Claims

1. A dye mixture consisting of a dye of the formula (1) and a dye of the formula (2) or (3) 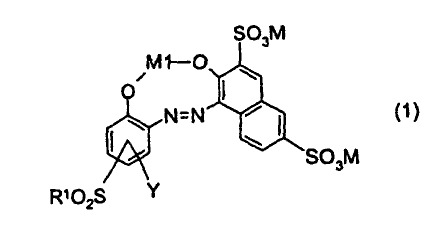 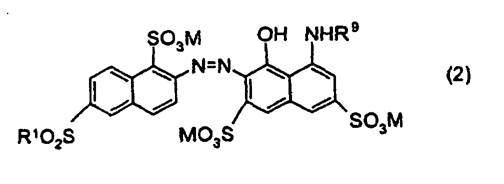 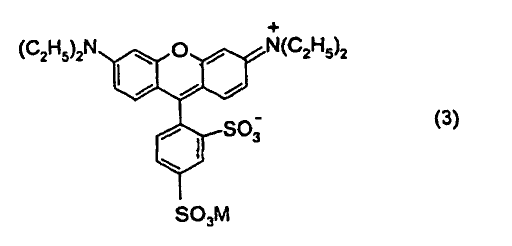 in which
Y is H, (C₁-C₆)-alkyl or (C₁-C₆)-alkoxy,
R¹ is OM, CH=CH₂, CH₂CH₂OR², CH₂CH₂NR³R⁴, CH₂CH₂SR⁵ or CH₂CH₂CR⁶R⁷R⁸,
R² is H, SO₃M, (C₁-C₆)-alkyl, (C₁-C₆)-alkyl which is unbranched or branched and unsubstituted or substituted by one or more radicals from the group consisting of OH, NH₂, COOM and SO₃M; (C₁-C₆)-acyl, (C₆-C₁₀)-aryl, C₆-C₁₀-aryl which is substituted by one or more radicals from the group consisting of halogen, OH, NH₂, COOM and SO₃M; or 5-10-membered heterocycles having 1 to 4 heteroatoms from the group consisting of O, N and S;
R³ and R⁴ independently of one another are H, (C₁-C₆)-alkyl, (C₁-C₆)-alkyl which is unbranched or branched and unsubstituted or substituted by one or more radicals from the group consisting of OH, NH₂, COOM and SO₃M; (C₁-C₆)-acyl, C₆-C₁₀-aryl, C₆-C₁₀-aryl substituted by one or more radicals from the group consisting of OH, halogen, NH₂, COOM and SO₃M;
R⁵ is (C₁-C₆)-alkyl, (C₁-C₆)-alkyl which is unsubstituted or substituted by one or more radicals from the group consisting of OH, NH₂, COOM and SO₃M; (C₁-C₆)-acyl, C₆-C₁₀-aryl, C₆-C₁₀-aryl substituted by one or more radicals from the group consisting of OH, halogen, NH₂, COOM and SO₃M;
R⁶, R⁷, R⁸ independently of one another are hydrogen, C₁-C₆-alkyl or are (C₁-C₆)-alkyl substituted by one or more radicals from the group consisting of halogen, OH, NH₂, COOCH₃, COOM and SO₃M;
R⁹ is H, (C₁-C₆)-alkyl, a (C₁-C₆)-alkyl which is unbranched or branched and substituted by one or more radicals from the group consisting of OH, NH₂, COOM and SO₃M; (C₁-C₆)-acyl, C₆-C₁₀-aryl, a C₆-C₁₀-aryl substituted by one or more radicals from the group consisting of OH, halogen, NH₂, COOM and SO₃M;
M1 is Cu, Co, Ni, Fe, Cr or 2/3 Al; and
M is hydrogen, a monovalent metal cation, one equivalent of a polyvalent metal cation, or an ammonium ion optionally substituted by (C₁-C₄)-alkyl, (C₁-C₄)-alkoxy-(C₁-C₄)-alkyl, hydroxy-(C₁-C₄)-alkyl, benzyl or (C₆-C₁₀)-aryl.

2. The dye mixture of claim 1, wherein M is hydrogen, sodium, lithium or potassium.

3. The dye mixture of claim 1 or 2, wherein Y is hydrogen, methyl, ethyl, methoxy or ethoxy.

4. The dye mixture of one or more of claims 1 to 3, wherein
R¹ is OH, CH=CH₂, CH₂CH₂OR² or CH₂CH₂NR³R⁴.

5. The dye mixture of one or more of claims 1 to 4, wherein
R² is hydrogen, SO₃M, methyl, ethyl, acetyl, phenyl, chlorophenyl, phenylsulfonic acid, morpholinyl or pyridinyl.

6. The dye mixture of one or more of claims 1 to 5, wherein
R⁹ is hydrogen, methyl, ethyl, acetyl, benzoyl, phenyl or halogen-, COOM- or SO₃M-substituted phenyl or benzoyl.

7. The dye mixture of one or more of claims 1 to 6, wherein the proportion between the dyes of the formulae (1) and (2), and also (1) and (3), based on dry weights, is 100:1 to 1:100, preferably 10:1 to 1:10.

8. The dye mixture of one or more of claims 1 to 7, wherein the dye of the formula (1) is C.I. Reactive Red 23, the dye of the formula (2) is C.I. Reactive Red 180, and the dye of the formula (3) is C.I. Acid Red 52.

9. The dye mixture of one or more of claims 1 to 8, wherein a shading dye from the group consisting of C.I. Direct Red 1, 11, 37 62, 75, 81, 87, 89, 95, 227; C.I. Acid Red 1, 8, 87, 94, 115, 131, 144, 152, 154, 186, 245, and 289; C.I. Reactive Red 21, 22, 35, 63, 106, 107, 112, 113, 114, 126, 127, 128, 129, 130, 131, 137, 160, 161, 174; C.I. Pigment Red 122, 176, 184, 185, and 269 is additionally present.

10. A process for preparing a dye mixture of at least one of claims 1 to 9, wherein the dyes of the formulae (1) and (2), or (1) and (3), and, if present, the shading dye are mixed with one another in the form of the dry powders, their solutions, water-moist or solvent-moist presscakes or masterbatches.

11. The use of a dye mixture of at least one of claims 1 to 9 for dyeing and printing natural and synthetic fiber materials, for recording text and images on a recording medium, and for coloring paper or cellulose in the pulp.

12. A recording liquid comprising a dye mixture of one or more of claims 1 to 9.

13. The recording liquid of claim 12, consisting essentially of 0.1 to 50% by weight of dye mixture, reckoned as dry weight, 0 to 99% by weight of water, and 0.5 to 99.5% by weight of organic solvent and/or humectant.

14. The use of the recording liquid of claim 12 or 13 as an ink-jet ink.

15. An ink set consisting of a magenta-colored recording liquid of claim 12 or 13, a black recording liquid, a yellow recording liquid and/or a cyan-colored recording liquid.

## Revendications

1. Mélange de colorants composé d'un colorant de formule (1) et d'un colorant de formule (2) ou (3) 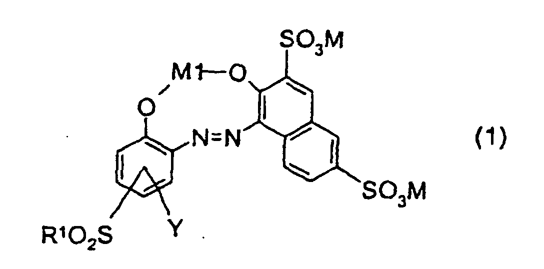 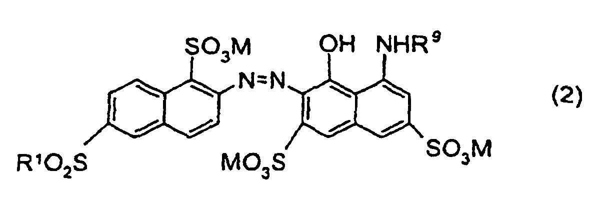 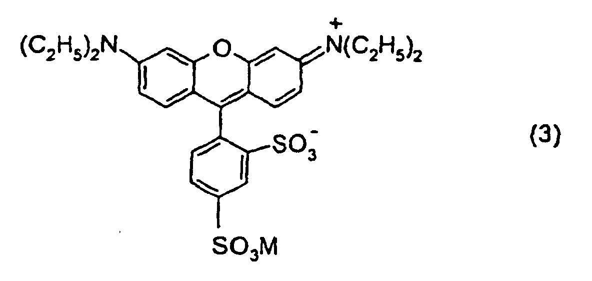 dans lesquelles
Y représente un atome d'hydrogène, groupe alkyle en C₁ à C₆ ou alcoxy en C₁ à C₆,
R¹ représente OM, CH=CH₂, CH₂CH₂OR², CH₂CH₂NR³R⁴, CH₂CH₂SR⁵ ou CH₂CH₂CR⁶R⁷R⁸,
R² représente un atome d'hydrogène, SO₃M, un groupe alkyle en C₁ à C₆, un groupe alkyle en C₁ à C₆, ramifié on non ramifié, non substitué ou substitué par un ou plusieurs groupes choisis dans le groupe formé par OH, NH₂, COOM et SO₃M, un groupe acyle en C₁ à C₆, un groupe aryle en C₆ à C₁₀, un groupe aryle en C₆ à C₁₀ substitué par un ou plusieurs groupes choisis dans le groupe formé par un atome d'halogène, OH, NH₂, COOM et SO₃M, ou des hétérocycles de 5 à 10 éléments possédant 1 à 4 hétéroatomes du groupe formé par O, N et S ;
R³ et R⁴ représentent, indépendamment l'un de l'autre, un atome d'hydrogène, un groupe alkyle en C₁ à C₆, un groupe alkyle en C₁ à C₆, ramifié on non ramifié, non substitué ou substitué par un ou plusieurs groupes choisis dans le groupe formé par le groupe OH, NH₂, COOM et SO₃M, un groupe acyle en C₁ à C₆, un groupe aryle en C₆ à C₁₀, un groupe aryle en C₆ à C₁₀ substitué par un ou plusieurs groupes choisis dans le groupe formé par OH, un atome d'halogène, NH₂, COOM et SO₃M ;
R⁵ représente un groupe alkyle en C₁ à C₆, un groupe alkyle en C₁ à C₆, non substitué ou substitué par un ou plusieurs groupes choisis dans le groupe formé par le groupe OH, NH₂, COOM et SO₃M, un groupe acyle en C₁ à C₆, un groupe aryle en C₆ à C₁₀, un groupe aryle en C₆ à C₁₀ substitué par un ou plusieurs groupes choisis dans le groupe formé par, OH, un atome d'halogène, NH₂, COOM et SO₃M ;
R⁶, R⁷, R⁸ représentent, indépendamment les uns des autres, un atome d'hydrogène, un groupe alkyle en C₁ à C₆ ou un groupe alkyle en C₁ à C₆ substitué par un ou plusieurs des groupes choisis dans le groupe formé par un atome d'halogène, OH, NH₂, COOCH₃, COOM et SO₃M ;
R⁹ représente un atome d'hydrogène, un groupe alkyle en C₁ à C₆, un groupe alkyle en C₁ à C₆, ramifié ou non ramifié, non substitué ou substitué par un ou plusieurs groupes choisis dans le groupe formé par OH, un atome d'halogène, NH₂, COOM et SO₃M, un groupe acyle en C₁ à C₆, un groupe aryle en C₆ à C₁₀, un groupe aryle en C₆ à C₁₀ substitué par un ou plusieurs des groupes choisi parmi le groupe OH, un atome d'halogène, NH₂, COOM et SO₃M,
M1 représente une atome de Cu, Co, Ni, Fe, Cr ou 2/3 Al ; et
M représente un atome d'hydrogène, un cation métallique monovalent, un équivalent d'un cation métallique multivalent ou un ion ammonium éventuellement substitué par un groupe alkyle en C₁ à C₄, un groupe (alcolxy en C₁ à C₄)(alkyle en C₁ à C₄), hydroxy(alkyle en C₁ à C₄), benzyle ou aryle en C₆ à C₁₀.

2. Mélange de colorants selon la revendication 1, **caractérisé en ce que** M représente un atome d'hydrogène, de sodium, de lithium ou de potassium.

3. Mélange de colorants selon la revendication 1 ou 2, **caractérisé en ce que** Y représente un atome d'hydrogène, un groupe méthyle, éthyle, méthoxy ou éthoxy.

4. Mélange de colorants selon l'une ou plusieurs des revendications 1 à 3, **caractérisé en ce que** R¹ représente un groupe OH, CH=CH₂, CH₂CH₂OR² ou CH₂CH₂NR³R⁴.

5. Mélange de colorants selon l'une ou plusieurs des revendications 1 à 4, **caractérisé en ce que** R² représente un atome d'hydrogène, SO₃M, un groupe méthyle, éthyle, acétyle, phényle, chlorophényle, acide phénylsulfonique, morpholinyle ou pyridinyle.

6. Mélange de colorants selon l'une ou plusieurs des revendications 1 à 5, **caractérisé en ce que** R⁹ représente un atome d'hydrogène, un groupe méthyle, éthyle, acétyle, benzoyle, phényle ou un groupe phényle ou benzoyle substitué par un atome d'halogène, COOM ou SO₃M.

7. Mélange de colorants selon l'une ou plusieurs des revendications 1 à 6, **caractérisé en ce que** le rapport de mélange entre les colorants de formule (1) et (2) ainsi que (2) et (3), par rapport aux poids à l'état sec, va de 100:1 à 1:100, de préférence de 10:1 à 1:10.

8. Mélange de colorants selon l'une ou plusieurs des revendications 1 à 7, **caractérisé en ce que** le colorant de formule (1) est C.I. Reactive Red 23, le colorant de formule (2) est C.I. Reactive Red 180 et le colorant de formule (3) est C.I. Acid Red 52.

9. Mélange de colorants selon l'une ou plusieurs des revendications 1 à 8, **caractérisé en ce qu'**il contient en plus un colorant de nuançage choisi dans le groupe formé par C.I. Direct Red 1, 11, 37, 62, 75, 81, 87, 89, 95, 227 ; C.I. Acid Red 1, 8, 87, 94, 115, 131, 144, 152, 154, 186, 245 et 289 ; C.I. Reactive Red 21, 22, 35, 63, 106, 107, 112, 113, 114, 126, 127, 128, 129, 130, 131, 137, 160, 161, 174 ; C.I. Pigment Red 122, 176, 184, 185 et 269.

10. Procédé de préparation d'un mélange de colorants selon au moins l'une des revendications 1 à 9, **caractérisé en ce que** l'on mélange ensemble les colorants de formules (1) et (2), ou (1) et (3), et éventuellement le colorant de nuançage sous la forme d'une poudre sèche, de leurs solutions, de leurs gâteaux de filtre-presse humides d'eau ou de solvant, ou de mélanges maîtres.

11. Utilisation d'un mélange de colorants selon au moins l'une des revendications 1 à 9 pour colorer et imprimer des matières fibreuses naturelles ou synthétiques, pour enregistrer des caractères et des images sur un support d'enregistrement et pour colorer dans la masse du papier ou de la cellulose.

12. Liquide d'enregistrement contenant un mélange de colorants selon l'une ou plusieurs des revendications 1 à 9.

13. Liquide d'enregistrement selon la revendication 12, essentiellement composé de 0,1% à 50% en poids du mélange de colorants, calculé en tant que poids à l'état sec, de 0% à 99% en poids d'eau et de 0,5% à 99,5% en poids d'un solvant organique et/ou d'un humectant.

14. Utilisation du liquide d'enregistrement selon la revendication 12 ou 13 en tant qu'encre pour jet d'encre.

15. Jeu d'encres composé d'un liquide d'enregistrement de couleur magenta selon la revendication 12 ou 13, d'un liquide d'enregistrement noir, d'un liquide d'enregistrement jaune et/ou d'un liquide d'enregistrement de couleur cyan.
